# EUROPEAN PATENT SPECIFICATION

(11) **EP 3 577 593 B1**
(45) Date of publication and mention of the grant of the patent: **07.04.2021**
(21) Application number: 18782307.5
(22) Date of filing: 26.09.2018
(51) Int. Cl.: B60K 35/00, G07C 5/08, G06F 21/64, H04L 29/06, H04L 9/32, H04L 29/08, B60K 37/00, G07C 5/00

(54) **INTEGRITY OF DATA RECORDS**
INTEGRITÄT VON DATENSÄTZEN
INTÉGRITÉ D'ENREGISTREMENTS DE DONNÉES

(30) Priority: 26.09.2017 GB 201715546; 18.05.2018 US 201815983288
(43) Date of publication of application: 11.12.2019
(73) Proprietor: PHM Associates Limited, London EC1V 2PT (GB)
(72) Inventor: HOOKHAM-MILLER, Peter, Pulloxhill Bedfordshire MK45 5HH (GB)
(74) Representative: Ruuskanen, Juha-Pekka
(86) International application number: PCT/EP2018/025249
(87) International publication number: WO 2019/063129

(56) References cited:
- US-A1- 2016 019 651
- US-A1- 2017 053 460
- US-A1- 2017 075 938

## Description

This disclosure relates to data records in a computerized system, and more particularly to methods and apparatuses for ensuring integrity of data records associated with objects. Exemplifying objects comprise vehicles.

Information records for objects can be collected and stored in a database or system of databases. Information records can be created for objects such as vehicles, e.g. passenger cars, commercial vehicles such as vans, trucks and so on, motorbikes, boats, aeroplanes etc. Information associated with an object can be gathered into a central database from various sources, such as from manufacturers, dealers, companies servicing vehicles or other objects, official records, insurance companies, suppliers of spare parts and other services and so on. Data relating to an object may also be collected and stored in a plurality of databases.

Information associated with an object and collected over time can be of interest to various types of users. For example, a potential buyer of a pre-owned vehicle has interest in knowing the history, ownership and other information associated with the vehicle. An information record for a pre-owned vehicle has traditionally comprised information such as the date of registration, outline specification of the vehicle, mileage, a record of owners, outstanding finance, and service history. The collected and stored data can be maintained and controlled, and the authenticity thereof verified, by the party owning and controlling the database. The proprietor of the data can be a third party supplier of vehicle information services. A database of records for pre-owned vehicles can also be operated by the manufacturer or sales organisation of the vehicles.

Data records kept by a third party service provider, a manufacturer or the like, may not be complete and/or may contain irrelevant and/or incorrect information. Thus the database may not contain all information wanted by e.g. a prospective buyer of a vehicle. Parties who should supply the information may have no incentive to provide all of the wanted information, may consider input of information too cumbersome, or simply a required input of information may be forgotten, or the input is already out of date. Also, there can be issues with the reliability, authenticity and tampering of the data.

No reliable industry standard for validation and storage of vehicle information data exists, and malicious manipulation of the data is relatively easy. This undermines the trust in the records that are currently available. For example, maintenance, service and accident history can be very unreliably and/or incorrectly collected, recorded and reported.

Thus, parties interested in reading an information record, such as potential buyers of pre-owned vehicles may wish to have more reliable and improved record for the object they are interred in.

US20170053460A1 discloses monitoring vehicle operations where information collected about/related to a vehicle can be stored in block chained ledger information regarding the monitored vehicle. The vehicle information transaction record may be signed to associate it with the monitored vehicle. Each ledger entry may be signed using a signature value based on previous entries in the ledger. The block chained ledger may enable a user to verify that the ledger entry has not been modified and that it is associated with a particular vehicle. For example, the root ledger entry may include a cryptographic signature based in part on the vehicle's unique vehicle identification number (VIN).

Herein disclosed embodiments aim to address one or more of issues in relation to verifying data collected over time.

The invention is defined by the appended independent claims. More specific aspects of the invention are defined by the dependent claims.

According to an aspect there is provided a method of securing integrity of data collected in a data storage arrangement for an object. More particularly, there is provided a method of securing integrity of data collected in data storage apparatus for an object over time, comprising
receiving, at the data storage apparatus, data relating to the object, wherein at least a part of the data originates from a data processing entity provided in connection with the object,
processing, by the data storage apparatus upon receipt of the data, the received data by storing the data in the data storage apparatus and computing a first digital signature for the data,
sending, by the data storage apparatus, the first digital signature to a distributed ledger for later use in verification of the data stored in the data storage apparatus,
sending the data from the data storage apparatus for presentation by at least one user device, and
computing a second digital signature for the data for use in verification of the integrity of the data based on the first digital signature stored in the distributed ledger.

According to an aspect the second digital signature may be computed by the data storage apparatus at the time of sending of the data from the data storage apparatus to the at least one user device.

Computing the digital signatures may comprise computing hashes for the data.

According to an aspect the requested data is retrieved from the data storage apparatus, in response to receiving a request for the data, and the second digital signature is computed for the retrieved data using the same algorithm that was used for computing the first digital signature.

In accordance with an aspect an application executed in a user device receives the data and the second digital signature from the data storage apparatus and the first digital signature from the distributed ledger, where after the application compares the first digital signature and the second digital signature to verify the integrity of the data.

The object may comprise a vehicle. At least a part of the data may be provided by a data gathering arrangement integrated with the vehicle. Verified data may be displayed by a display device integrated with the vehicle. It is possible to limit the right to access the data stored in the data storage apparatus to devices and/or users associated with the vehicle. Presentation of at least a part of the data may be limited to user devices connected with the vehicle via a wireless short range communication link.

The data stored for the object may be compared to data collected for other objects of similar type and verified by means of a distributed ledger. The object may be ranked and/or valued relative to the other objects.

According to a more specific aspect the distributed ledger comprises a blockchain.

Storing may comprise storing at least a part of the data in the distributed ledger. The data may be stored in a cloud storage.

The user device may comprise a handheld device arranged for wireless communications.

At least a part of the distributed ledger and/or data storage arrangement may be provided in virtualized environment.

According to another aspect apparatus configured to perform the herein disclosed methods is provided. Apparatus for storing data collected for an object comprises at least one processor and at least one memory including computer program code, wherein the at least one memory and the computer program code are configured, with the at least one processor, to cause the apparatus to receive data relating to the object, wherein at least a part of the data is received from a data processing entity provided in connection with the object, upon receipt of the data, compute a first digital signature for the received data and store the received data in the at least one memory, send the first digital signature to a distributed ledger for later use in verification of the data stored in the server apparatus, and send the data for presentation by at least one user device, the apparatus being further configured to compute a second digital signature for the data and send the second digital signature with the data to the at least one user device for use in verification of the integrity of the data based on the first digital signature stored in the distributed ledger.

The apparatus can be configured to automatically compute a first hash for the data upon receipt of the data and a second hash for the data in connection with sending of the data.

The apparatus can be configured to communicate the first digital signature to a blockchain.

The apparatus according can be configured to retrieve, in response to receiving a request for the data, the requested data from the at least one memory, and compute the second digital signature for the retrieved data using the same algorithm that was used for computing the first digital signature for use in verification where the integrity of the data is verified based on comparison of the first digital signature and the second digital signature.

The apparatus can be configured to communicate data with a data processing entity integrated with the object.

The apparatus may further comprise a data gathering arrangement integrated with the vehicle. A user interface for presenting verified data to a user by a device integrated with the vehicle may also be provided.

The apparatus may be configured to control access to the data based on at least one of a password, a user ID, a smart card, an equipment ID, and a token.

A user device for use in association with data storage apparatus for storing data collected for an object may also be provided. The data storage apparatus is configured to compute a first digital signature for the data and send the first digital signature to a distributed ledger for later use in verification of the data stored in the data storage apparatus. The user device comprises a user interface, at least one processor and at least one memory including computer program code, wherein the at least one memory and the computer program code are configured, with the at least one processor, to cause the user device to receive data relating to the object from the data storage apparatus, receive the first digital signature from the distributed ledger, compare the first digital signature and a second digital signature computed for the data to verify the integrity of the data, and control presentation of the data on the user interface accordingly.

The user device can be configured to receive the data and the second digital signature from the data storage apparatus.

The user device can be configured to communicate with the object over a wireless short range communication link. Presentation of the data can be arranged to be enabled only when the user device is within the range of the link.

The user device may comprise a handheld device arranged for wireless communications. The device can be configured to handle at least one of an unique identifier, a password, a smart card, and a token in connection with access to the data.

At least a part of the herein described apparatus may be integrated with the object. At least one integrated circuit for providing a unique identifier of the object may be provided. The apparatus can be arranged to control access to the data based on the unique identifier.

A display integrated with or in close proximity to the object may be provided.

A data storage system comprising the apparatus described herein may also be provided.

A vehicle comprising an apparatus as described herein, a wireless communication interface for communication of data to and from a data storage arrangement, and a display configured for presentation of verified data from the data storage arrangement may also be provided.

A computer code product may be configured to perform the methods. Various exemplifying embodiments of the invention are described below with reference to the attached drawings. Steps and elements explained herein may be reordered, omitted, and combined to form different embodiments and any step indicated as performed may be caused to be performed in another order. In the drawings:
Figure 1 is a view of an example of a network of computer nodes;
Figure 2 shows an example of processor apparatus;
Figure 3 shows an example of a distributed ledger;
Figures 4 and 5 illustrate examples of collecting data;
Figure 6 illustrates an example of providing verification of data;
Figure 7 is an example of a user interface arrangement;
Figures 8 and 9 are flowcharts in accordance with certain examples; and
Figure 10 shows a further example.

The herein given examples illustrate how distributed ledgers can make reliable record keeping possible. Data associated with an object can be gathered into a central database from various sources, such as from manufacturers, dealers, companies servicing vehicles or other objects, official records, insurance companies, suppliers of spare parts and other services and so on. Data relating to an object may also be collected and stored in a plurality of databases. The databases can be separate and/or operated independently from each other. Distributed ledgers can be used for storing data and/or as a notary service for validation of content and order of stored records and can be used to address, among other issues, the data integrity issue outlined above.

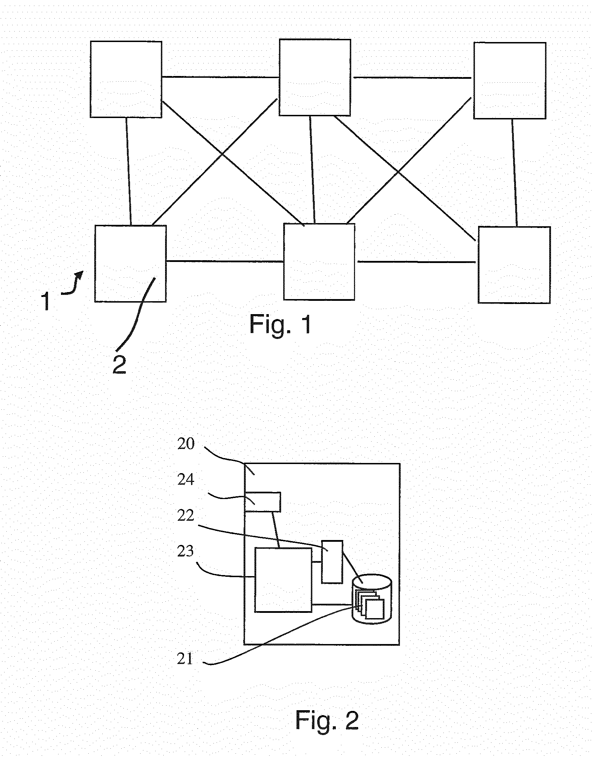

Figure 1 illustrates an example of a network 1 of interconnected nodes 2 operating a distributed ledger. Each node maintains in local memory a copy of a distributed ledger. It shall be appreciated that Figure 1 only shows a small number of interconnected nodes, and that a distributed ledger network (DLN) can comprise a much larger number of interconnected nodes.

The below described examples are based on blockchain technology for maintaining records for objects such as pre-owned vehicles. Blockchain technology provides a distributed ledger that facilitates distribution of an electronic or digital ledger across a plurality of nodes, with a high degree of resistance against dishonest tampering of the ledger. The blockchain technology uses cryptography techniques to minimise security risks. Various other computational algorithms and approaches may also be deployed to ensure that the recording on the blockchain database is permanent, chronologically ordered, and available to all other users on the network.

Figure 2 shows an example of apparatus 20 for use at a node 2 of the network 1 of Figure 1. Apparatus 20 can be configured to execute an appropriate software code to provide control functions required by the process described herein. A processor 23 operates in accordance with program code stored at memory 21. Both the processor and the memory may be implemented as one or more chips, Figure 2 showing two separate data processing units 22, 23. The memory may include read-only memory, volatile memory, non-volatile memory and random-access memory. The above elements may be provided on one or more circuit boards. The apparatus also comprises an interface 24 for transferring data to and from one or more other nodes 2 of the distributed ledger network. It should be appreciated that the apparatus shown in Figure 2 described above may comprise further elements which are not directly involved with the embodiments described hereafter.

At least a part of the nodes 2 of Figure 1 can be provided in virtualized environment and can comprise virtual data processing instances. In computing, virtualization refers to the act of creating a virtual, rather than actual, version of something. Thus nodes 2 can comprise virtual computer hardware platforms, storage devices, and computer network resources.

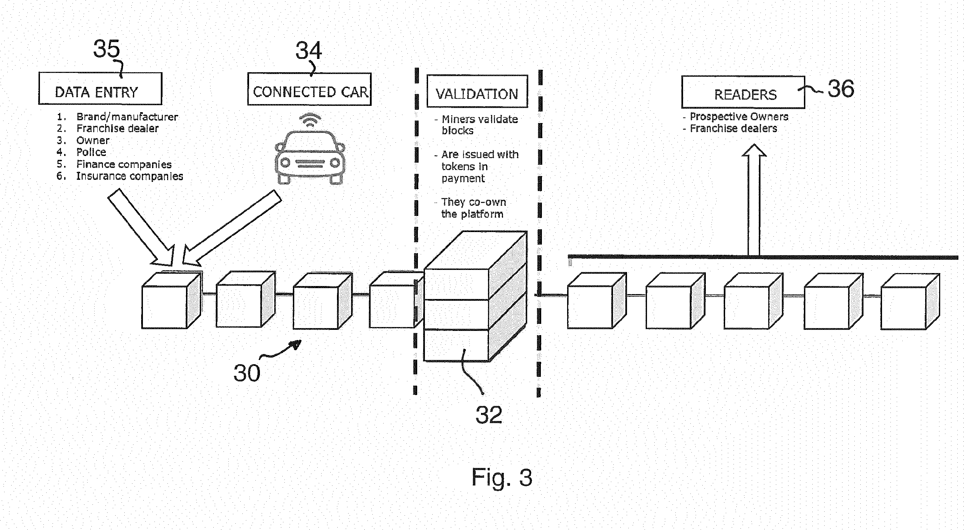

Figure 3 shows an example of a blockchain based data arrangement. Depending on policy, protocol and configuration, each party on a blockchain may have access to the entire database and its complete history whilst no single party can have the control on the data or the information. Communication can occur directly between the peer nodes and not through a central node. Each node can store and forward information to all other nodes. Each node, or user, on a blockchain can have a unique address that identifies it. Transactions can occur between blockchain addresses. A blockchain can thus be seen as a publically shared immutable ledger, an appended only log of transactions.

As shown in Figure 3, transactions are contained in nodes, or 'Blocks' 30 which are linked together through a series of hash pointers. An electronic ledger based on blockchain technology records changes in the ledger in the form of a chain of blocks. Each block is linked to the preceding block in the chain, such that an attempt to change one block in the chain would necessitate a change to the next block in the chain, and so on. Accordingly, any attempt to change one block of the chain would necessitate changes to all subsequent blocks in the chain. Any tampering of a block can be detected since the computed hash pointer to it would no longer be valid.

The blockchain system is open, and a key feature of a blockchain is that, in principle, every user can have their own copy of the entire blockchain. There is no central or master copy - simply the multiple copies held by "miners" 32 and nodes in the user community. A miner can validate the new blocks. Miners can be rewarded for their efforts through a number of algorithmic processes that can result in payment. These can comprise small payments, e.g. tokens that can be attached to individual transactions. Consensus on what types of blocks and transactions can be part of the blockchain is automatically reached according to whether the majority of blockchain holders accept newly proposed blocks. This attribute leads to a system where consensus is hardwired into the software. Without the need for any central control or mediator, a blockchain allows for leadership democracy, a new way of governing human behaviour online, through the principle of 'one computer, one vote'. In this way, a blockchain can act as a provenance protocol for sharing data across disparate semi-trusting organisations. The digital nature of the ledger means that blockchain transactions can be tied to computational logic and in essence programmed. So users can set up algorithms and rules that automatically trigger transactions between nodes.

According to the Figure 3 example blockchain technology can be used for keeping record of pre-owned vehicles, in the example of a car 34. This can provide advantage in generation of a reliable record of the history of the vehicle. For example, this can mitigate concern and anxiety of ownership of a pre-owned vehicle. A reliable record can be made available regarding e.g. the ownership, usage and maintenance history of the vehicle. Information on the real fuel consumption and/or emissions can also be collected. Other data such as where, when and how the car or other type of vehicle has been used and whether the car or other type of vehicle has been involved in accidents, may also be collected and recorded. Concerns like is the mileage genuine, has the vehicle been driven and otherwise used sensibly, has the vehicle been involved in any accidents, has any particular incident affected the overall operation of the vehicle and so forth can be addressed.

Detailed and verified information of the ownership record, and that the vehicle has been properly maintained, the mileage is genuine, that the vehicle has been driven and otherwise used sensibly, of any abnormal or undesirable incidents or usage periods and so forth can be valuable. It can also be important to have reliable recorded indication if the vehicle has been involved in any accidents, and if so, what was the damage and how the vehicle was repaired. Any indication of changed performance after the accident, or any other alteration, can also be of value. An indication of any warranty work can also be valuable. Also, it might be of interest to know if the vehicle has ever been stolen or broken into. Some vehicles may have been used for motor sports, and/or driven or otherwise used in extreme conditions, and the potential buyers etc. might want to know about this. The perceived view of a vehicle brand can be enhanced if concerns and anxiety of future ownership of a pre-owned vehicle can be mitigated.

Data collected from a plurality of similar vehicles can be compared. For example, the vehicles can be rated based on a rating scheme taking into account various pieces of collected and stored information. If a vehicle has a differing history this can be indicated to the reader of the record. Relative values of vehicles can be estimated based on the comparisons.

A blockchain based data storage and verification arrangement can be vehicle brand or manufacturer specific. This can be used to distinguish a brand from other, and thus provide competitive edge. Each manufacturer or brand can have their own specific data sets collected and the data verified by means of a blockchain.

In Figure 3 example data related to a car 34 can be entered into the blocks 30 by various sources 35 such as the manufacturer and/or dealer thereof, by the owner, by financial and/or insurance companies, authorities such as police, courts and/or vehicle registration and/or vehicle inspection authorities and so on. Data can also be collected from various other sources. The data is then made available for the potential users 36, such as prospective buyers, dealers and so forth via an appropriate interface application.

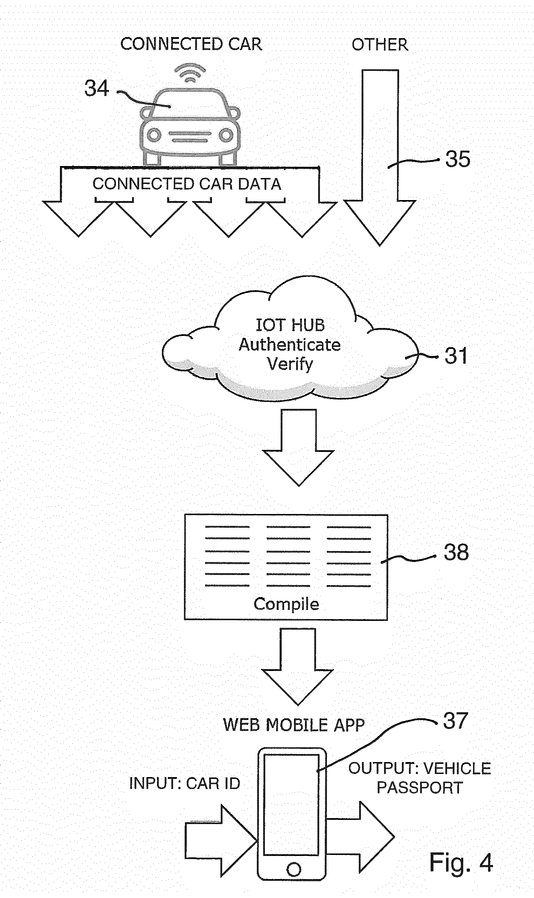

Figure 4 shows an example where data is collected from a connected car 34 and other sources 35 to a hub 31. The hub can input the data into a blockchain record 38, or another appropriate data storage arrangement. A user can access the data from the block chain via an appropriate user interface. For example, the data can be accessed via an application running in a terminal device such as a smartphone 37, a tablet or laptop computer. A car ID input may comprise a vehicle identification number (VIN), registration number or the like unique identifier. According to a possibility the registration number, VIN or the like ID is input by taking a picture of or otherwise scanning the ID (e.g. a string of characters, a barcode, or another graphic presentation) by a camera of the smart phone or other terminal device.

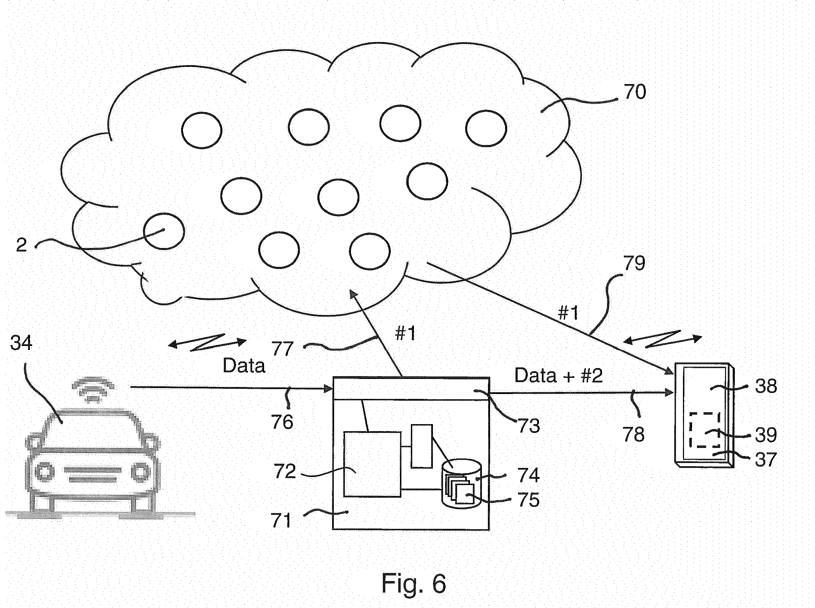

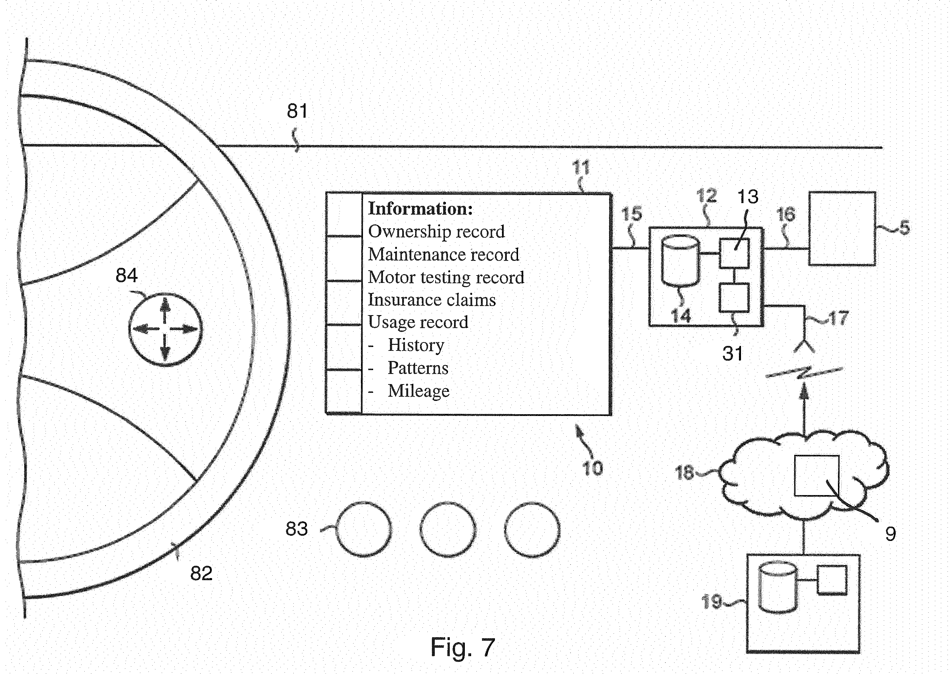

Certain further examples of user interfaces are described with reference to Figures 6 and 7.

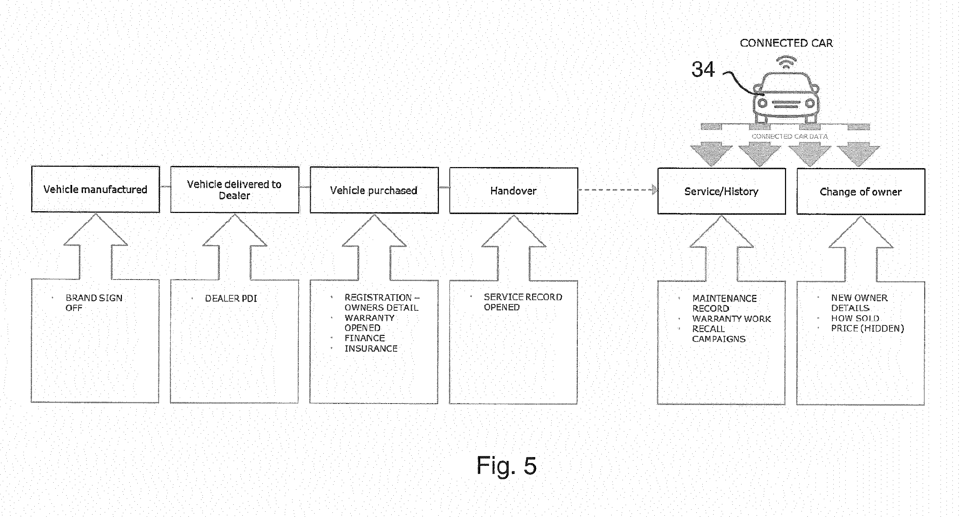

Figure 5 gives certain examples of the information feed for building a data record for a connected vehicle 34.

Access rights to information records associated with a vehicle can be limited. Access can be limited e.g. based on use of passwords, user IDs, smart cards, equipment IDs, tokens and the like.

The vehicles itself can be configured such that they are a reliable source of information. A connected car is a concept that can be used for feeding information to be saved in and/or protected by the blockchain. For example, a car that can be equipped with Internet access, for example access to a wireless local area network (WLAN) and/or a cellular system. This allows the car to share internet access with other devices both inside as well as outside the vehicle. Often, a car can also be outfitted with special technologies that tap into the internet via a cellular system or wireless LAN and provide additional benefits to the driver.

Connected cars can be arranged to collect vast amounts of data about driving patterns, servicing and other maintenance events and other external events impacting the car. This data can be automatically collected e.g. from the control electronics of the vehicle and/or sensors mounted in the vehicle without involvement of any human operators. The processing and storing of the collected data can also be arranged to take place automatically. Thus data about driving habits, usage patterns and conditions, servicing, repairs and other vehicle related incidents can be produced and stored automatically and can be added to the record of the vehicle in real-time, or substantially in real-time.

Combining real time updates from a connected car data can feed to the blockchain, and/or at least one database implemented outside a blockchain, as the case may be. The accumulated data can be used to build a more complete record of the history of the vehicle. A prospective purchaser of a pre-owned vehicle can be reliable and up to date data on their purchase.

An example of use of connected car concept is "eCall". The European Union is to introduce eCall regulation requiring all new cars be equipped with eCall technology from April 2018. In the event of a serious accident, eCall automatically dials 112 - Europe's single emergency number. The system is integrated with the vehicle and communicates wirelessly the vehicle's exact location to emergency services, the time of incident and the direction of travel (this can be important e.g. on motorways and one way systems), even if the driver is unconscious or unable to make a phone call. The location information can be based on a positioning system such as Global Position System (GPS), Galileo, cell based location or the like. An eCall can also be triggered manually by pushing a button in the car, for example by a witness of a serious accident. eCall is planned to transmit data that is necessary to respond to an accident. However, the communication capability thereof can be expanded to communicate data to a data verification system described herein.

A communication unit of a connected car can be provided at the time of manufacture as an integrated part of the vehicle. The connected car data collection and communication unit can be located and mounted as an integrated part such that it cannot be tampered by the owners, dealers, maintenance and service people or anyone else having access to and/or using the vehicle. The unit can include a smart card, e.g. a Subscriber Identity Module (SIM) of a cellular system or the like, for identifying the unit, and thus the vehicle, thereby making the identification reliable.

A possible way of using the technology is based on private blockchains, for example *Hyperledger Fabric* or similar. This technology may be used to facilitate managed asynchronous storing of data retrieved from connected cars in a network of computing instances.

Blockchain assisted content validation techniques can be used instead of storing all, or any collected data in a blockchain. For example, cryptographic hashes of data can be stored on a public blockchain instead of storing the actual data in the blockchain. This can be provided in combination with storing data in a database or a plurality of databases together with an appropriate mechanism facilitating verification of integrity of the stored data.

Examples of use of content validation techniques and cryptographic hashes stored on a public blockchain in combination with proprietary conventional storage of data and a validation mechanism are shown in Figures 6 and 7. The data can be collected in a centralised database, or a system of databases, for storing as described in the above examples.

Figure 6 shows as a cloud a network 70 of computing nodes 2 providing a blockchain. A vehicle 34 can communicate data over link 76 with a data processing and storage server 71. The communication may occur via an interface part 73 of the server 71. The data is stored in a memory 74 of the server where a record 75 is maintained for the vehicle 34.

Relevant data from connected cars may be stored e.g. in a SQL database using the server application 72 in an appropriate framework. The server application may communicate with a token approval server of a vehicle manufacturer, request relevant data from the connected vehicles, and create regular reports that are to be added to the record. The server application can also be configured to create hashes that are to be stored on a public blockchain.

A server application 72 running in a processor of the server can, upon receipt of the data, automatically compute a hash #1 for the data. The data is then stored in the memory 74 in a relevant record 75. The server application 72 is arranged to communicate the hash #1 to the blockchain in the network 70, this being indicated by arrow 77. The server 71 may interface the blockchain via an appropriate gateway function. For example, the hash #1 may be routed via a separate node, e.g. communicated first to a node operated by a gateway service provider. Alternatively, a blockchain gateway function can be provided in the server 71. Hash #1 is then stored in the blockchain.

Hashing may be done e.g. using a standard SHA256 one-way cryptographic hashing function. SHA256 and similar algorithms are widely available through standard cryptographic libraries.

A user wishing to access the records of server 71 may do so via an appropriate user terminal device 38. The user device may comprise e.g. a smart phone, a tablet or a laptop computer. An application 39 can be provided in the user device for handling necessary data communications and for providing a display of verified vehicle related information on a screen 37 of the device.

The application 39 can be configured to request for data from the server 71. At the same time, the application can request for a relevant hash, in this example hash #1, from the blockchain. The request for the hash #1 can e.g. be sent to a blockchain gateway function. According to another possibility the server application 72 requests, in response to receiving a request for data from the user device, the gateway function to provide the application 39 running in the user device 38 with the relevant hash #1 from the blockchain.

The server application 72 responds the request for data by returning in message 78 the requested data together with a second hash #2 computed for data prior sending thereof to the user device. Substantially at the same time, the application 39 of the user device receives by message 79 hash #1 from the blockchain. The application 39 can then compare the hashes. If the hashes match, the data is considered valid. If the hashes do not match, this is considered as an indication of potentially erroneous data. The data may still be displayed on display 37 but with a warning that it cannot be verified and may therefore not be reliable.

By comparing the hash of the retrieved report and the hash retrieved from the blockchain, the client application can determine whether a record has been altered since the point of storage. This way a user can determine that data has been stored and kept correctly and it is possible at any point to conclusively prove the validity of its records.

According to a more specific example, when a specific record is to be validated, the server application can expose an application programming interface (API) that provides the correct data set. The client application running at the user device can then request a corresponding hash from the blockchain storage. For the storage of hashes on a target blockchain there are different possible approaches. For example, the server system can directly enter data into the public blockchain by interacting with a node. This could be done by using a node hosting service, for example a service like *Infura* or similar. This approach may be slightly complicated for some applications because it requires the implementation of client side signing and transaction crafting since the node is operated remotely. For ease of implementation the system can alternatively rely on a service like *Factom* which focuses on the storage of information on different target public blockchain networks and offers an API that the server application on the server can interact with.

This way of using blockchain for the verification is relatively easy to design and implement. The solution may require minimal blockchain development and does not require any advanced or complex blockchain infrastructure. All critical aspects of the infrastructure can be obtained as services which reduces long term maintenance cost and risk. Yet the solution covers critical aspects of integrity and retains the value of using blockchain technology for verification of data records.

According to a possibility access to records associated with a vehicle are arranged via a data system integrated with the vehicle. For example, a car can be provided with an information and guidance system comprising a display and a controller arranged for providing information to a user about the features of the car and how to use them. The control arrangement and the display can be arranged for presentation of information that has been verified using blockchain as described above.

Figure 7 shows an example of an information system 10 in accordance with certain embodiments. More particularly, Figure 7 shows a display 11 located in a dashboard 81 of a car. The display is located next to steering wheel 82 so that a user can conveniently view the graphical displays presented by the information system. The display can comprise a touch screen type user interface so that a user can select a function or feature by touching an appropriate icon on the display in per se known manner.

The in-car information display apparatus is further shown to comprise a processor apparatus 12 comprising at least one data processor 13 and memory 14. The processor apparatus is connected by data connection 15 to the display 11 thereby enabling control of the graphical displays.

Further, a communication connection 17 is shown. Connection 17 can be used to connect the in-car information system to an external data network 18, for example internet protocol based network. Via this connection the control system can connect to appropriate data server apparatus 19. The control apparatus 12 can be configured to collect and feed information in substantially real time to the data recording system via the data network 18.

The server apparatus 19 can comprise, for example, an application server configured to collect data from connected vehicles and arrange verification of the data using blockchain as explained above. The server apparatus may be operated by the manufacturer or seller of the vehicle or the information system equipment, a third party provider of relevant information services and so on.

The in-car system may also be configured to connect to a blockchain access gateway 9. Alternatively, or in addition, the access to a relevant blockchain may be arranged via the server apparatus 19, as explained above.

Communication of data between the information system and the data network 18 can be carried over one or more wireless connections. The wireless communications can be provided e.g. based on cellular technologies (e.g. 3rd, 4th and/or 5th generation cellular systems with data communication capability), short range technologies enabling packet data communications such as those based on the Bluetooth™ protocol or Infrared, and/or a local area wireless network (LAN) such as via a WiFi base station.

In accordance with certain embodiments the processor apparatus can communicate data with other components of the vehicle. This can be provided via interface 16. Interface 16 provides an input for receiving information from and/or sending information to certain components of the vehicle. In Figure 7 an example of at least one component providing input data is denoted by reference 5. Such a component can include various sensors, monitoring and diagnostic apparatus integrated with the car, and so on. In accordance with certain embodiments the input can be received by the control apparatus 12 and forwarded to the blockchain utilising data storage system for use in generating a record for the vehicle. A data collection component can be mounted in the vehicle during manufacture thereof, or mounted later.

Figure 7 shows further user control switches 83 and 84. Control switches 83 may be provided for example for controlling the heating and/or air conditioning system and/or selecting drive mode (sport, normal, cruise etc.). Controller 84 can be adapted for controlling the cruise control system or another feature without the need to take hands off from the steering wheel 82. Information of the use of the controls may be collected as an indication of e.g. the conditions and manner in which the vehicle has been driven and to form a use profile in the data record.

The integrated vehicle data system can be used to limit access to the records associated with the vehicle to those having real interest in the data. For example, access may be enabled only via control apparatus 12 integrated with the car. The control apparatus may be configured to provide presentations of the information display only via the integrated display 11. According to a possibility the control apparatus may communicate verified data via a short range radio link to an associated and/or trusted user device, e.g. a smart phone or tablet computer.

The control apparatus can have a unique equipment identity code and the access may be limited by the code. A smart card, e.g. a SIM or the like chip 31 may be used to limit access to the data.

Use of a secure identity code, token or the like linked to the vehicle can be used to limit the number of person who have access rights to the data. A potential buyer nevertheless can see the record on the display 11 by getting into the vehicle and e.g. selecting a "show the vehicle data" from the menu. A vehicle associated information display may also be provided as a part of a user terminal apparatus connected to, or associated with, the vehicle and configured to embody the herein described principles. E.g. a user may see the data on a display of a smartphone when close enough to the vehicle for communication via a short range radio link. For example, a user terminal can have Bluetooth™ link, infrared or another short range connection to the control apparatus 12, and thus use the access rights of the control system 12 to access the vehicle records.

The system may be arranged to ask for a password, personal identification number (PIN), token or the like as an added security measure.

According to a possibility an estimate of the value of the vehicle, or another ranking relative to other vehicles is computed and given based on the verified data. This can be computed on information of sales of similar vehicles and the record of the particular vehicle.

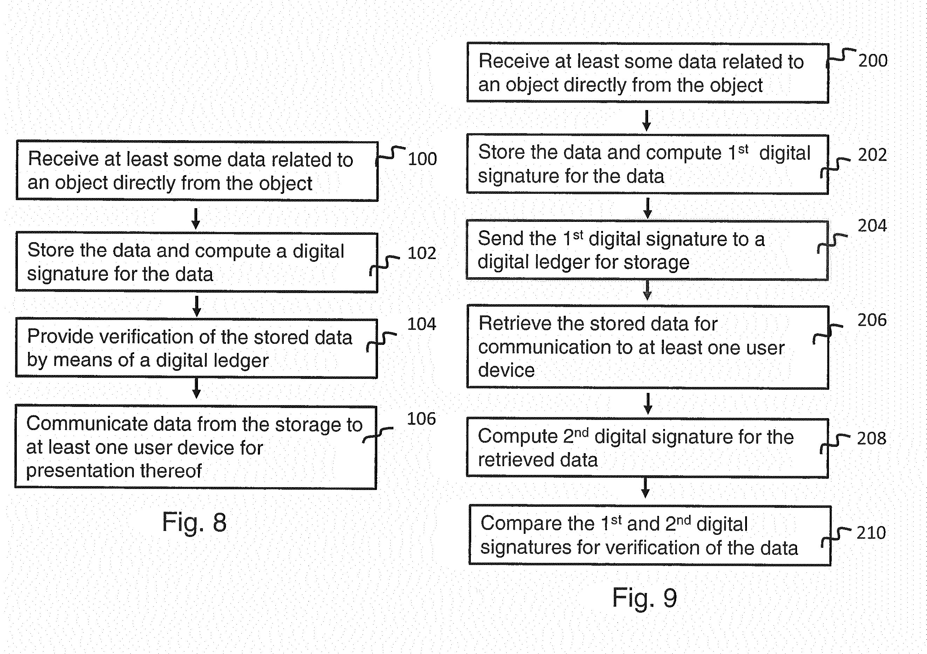

Figure 8 is a flowchart in accordance with certain embodiments for providing trustworthy information about an object. Integrity of data collected in a data storage arrangement for the object over time can comprise receiving at 100 data relating to the object. At least a part of the data is received from a data processing entity provided in connection with the object. The data can be communicated to the data processing arrangement from the data processing entity connected to the object without human intervention.

At 102 the received data is processed by storing the data in a data storage arrangement. A digital signature is computed for the data at the time of storage. The method comprises further use of a distributed ledger in providing at 104 a verification of the data stored in the data storage arrangement. At 106 the data is communicated from the data storage arrangement to at least one user device for processing and presentation by the least one user device.

The distributed ledger may comprise a blockchain. Computing the digital signature can comprise computing a hash for the data. Verification of the data can comprise comparing hashes computed at different times for the data. The verification and processing may also comprise storing at least a part of the data in the distributed ledger.

Figure 9 shows a more detailed embodiment where the verification but not the storage of the data is provided by a distributed ledger. In this case processing of collected and received data comprises storing at 202 data received at 200 in at least one database operated separately from the distributed ledger. At the same time a first digital signature, e.g. a hash is computed. The first digital signature is then communicated at 204 to the distributed ledger and stored therein. The data may be stored in a server apparatus and/or a cloud storage.

At 206, in response to receiving a request for the data, the requested data is retrieved from the at least one database. A second digital signature is computed at 208 for the retrieved data using the same algorithm as was used for computing the first digital signature at 202. The first digital signature computed at 202 and the second digital signature computed at 208 are then compared at 210 to verify the integrity of the data.

The method can further comprise receiving, by an application executed in a user device the data and the second digital signature from the at least one database at before the comparison. At this stage the application also receives the first digital signature from the distributed ledger. The application can then perform the comparison of step 210 control a display and/or another component of the user device accordingly.

At least a part of the data can be collected by a data gathering arrangement integrated or otherwise closely associated with the object, for example a vehicle. Verified data may be presented to a user by a display device integrated to the object. The right to access the data stored in the data storage arrangement may be limited to devices associated with the object. The right to access the data stored in the data storage arrangement may be limited to devices integrated in the object, for example a vehicle. At least a part of the data may be communicated from the object over a wireless short range communication link for presentation by a handheld user device.

Verified data for an object may be compared to data collected for other objects of similar type and also verified by means of a distributed ledger. Objects may be ranked and/or valued relative to other objects based on the verified data.

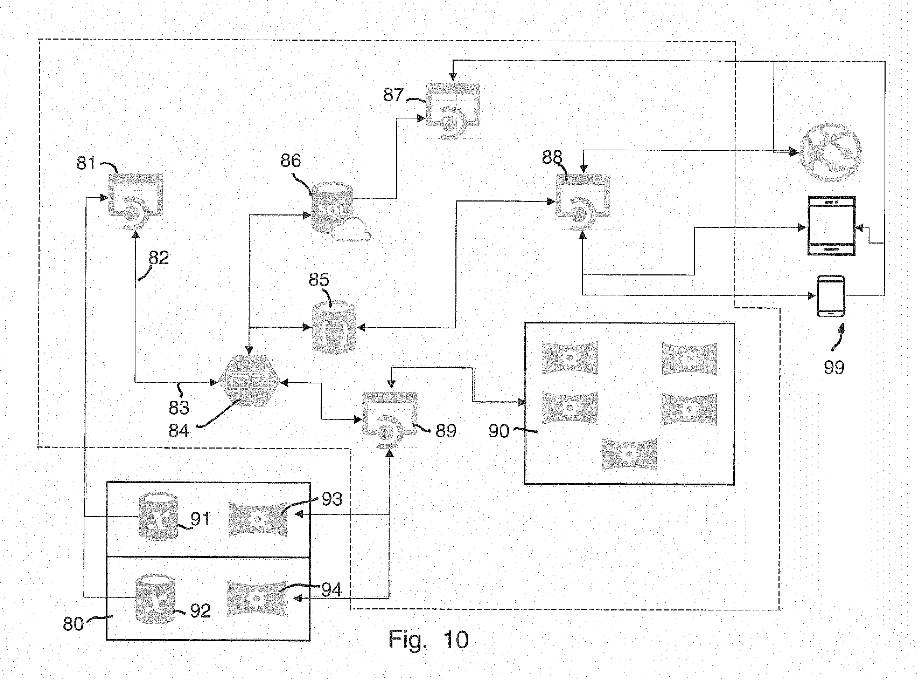

Figure 10 shows another example of a possible architecture for implementing the herein described principles. At 80 an OEM sends Trusted Vehicle Data Import API data, for example on in json format to a Trusted Vehicle Data import API 81. The data is then hashed at 82 to obfuscate the information, using e.g. SHA512. The data is then placed at 83 in an event queue 84 for processing on the Blockchain and to be written to a Trusted Vehicle Database 85. A Blockchain Gateway 89 performs a zero sum transaction on the Blockchain. Data is then stored in a Blockchain Cluster 90. A consensus is reached on the data and the transaction hash from the Blockchain can be written to the Trusted Vehicle Database against the corresponding Database record.

Trusted Vehicle Security database 86, Trusted Vehicle Security API 87 and Trusted Vehicle API 88 are provided for the purposes of enabling user interface through web accesses, e.g. via a website, a tablet or a smart phone, commonly denoted by 99. In accordance with an example the user of the user devices can verify the data via the Trusted Vehicle API 88.

Figure 10 shows also the possibility of the OEM 80 hosting, in addition to databases 91, 92, a cluster 93, 94 of the Blockchain. In this scenario the OEM 80 can verify hashes from the Trusted Vehicle Database 85 against the data stored in the Blockchain.

The fact that the data record is verified by means of distributed ledger can be taken into account in valuation of a vehicle. Used vehicles without a trusted record detailing information such as change(s) of ownership, servicing intervals and other service history, accidents, usage history and profile, and other verified details are estimated, on average, be undervalued by roughly 15%.

The above described can also be applied to storing of other information when verification of the accuracy of information records is desired. For example, an organisation handling secure transportation of valuable items (e.g. cash, jewellery, certificates etc.) may wish to maintain a verifiable record of the movements of its fleet and personnel in a manner where the records cannot be tampered. Location information record collected from the vehicles of the fleet and/or wearable location devices of the personnel can be stored and verified by means of a blockchain as described above. The location information record can be stored entirely in a database and only verified by means of a blockchain as described above.

Maintaining information on the blockchain, and/or using the blockchain to verify the correctness of the information, can assist in maintaining the value of a pre-owned vehicle or the like object. The owner has a vested interest in feeding in and maintaining the data. Including vehicle's history, from manufacture to the date of accessing the data, and allowing potential customers to 'read' the history, can be used to provide transparency and most importantly, guarantee the vehicle's provenance. The prospective owner can count on the blockchain verified information to correctly describe the pre-owned vehicle.

New previously unavailable data can be provided and reliably stored and presented. This increases the value of the information and the vehicle.

Collection and maintaining of reliable information can also be valuable for the manufacturer and/or the dealer of vehicles. The strength of a vehicle brand's new vehicle business can ultimately be determined by the strength of the associated pre-owned business. The data can be used to protect and strengthen a brand's residual values, reduce the cost of ownership, increase customer loyalty, and Improve dealer profitability. A dealer can count on the blockchain protected information to conclusively describe the pre-owned vehicle, including previously unavailable data. For a manufacturer starting and maintaining a brand related blockchain can provide advantage in increased the value of their pre-owned vehicles. The data collected from vehicles can also be used to offer and provide after sale services and/or new features, and/or feature updates more accurately. Offerings to relating to a vehicles can be communicated more accurately based on verified data of e.g. usage of the vehicle.

The capability of producing reliable data on vehicle location, usage and booking information can also be advantageous in applications where locations and scheduling of use and maintenance of vehicles is needed. Examples of such application include car sharing, car pools, company car fleets and the like. Private storage of data and verification thereof by means of a distributed ledger as disclosed herein can also be used for other applications, such as financial applications, e.g. banking and insurance applications, gaming applications, maintaining address and other records of personal or otherwise sensitive information and so forth.

Appropriate data processing apparatuses can be configured to provide the above referenced functionalities of collecting, storing, verifying, presenting and so forth of data. One or more servers, other data processing apparatuses and/or virtual computing instances can be arranged to store information in files or other record and provide verification of data collected over time using a distributed ledger. The apparatus can be configured to execute an appropriate software code to provide the necessary functions.

The various embodiments and their combinations or subdivisions may be implemented as methods, apparatuses, or computer program products. Methods for downloading computer program code for performing the same may also be provided. Computer program products may be stored on non-transitory computer-readable media, such as memory chips, or memory blocks implemented within the processor, magnetic media such as hard disk or floppy disks, and optical media such as for example DVD and the data variants thereof, CD, magnetic disk, or semiconductor memory. Method steps may be implemented using instructions operable to cause a computer or a set of computers, processors or cores to perform the methods. The instructions may be stored on any computer-readable media, such as memory or non-volatile storage.

The data processors may be of any type suitable to the technical environment, and may include one or more of general purpose computers, special purpose computers, microprocessors, digital signal processors (DSPs), application specific integrated circuits (ASIC), gate level circuits and processors based on multi core processor architecture, or virtualized data processing instances, as non-limiting examples. The data processing may be distributed across several data processing modules. A data processor may be provided by means of, for example, at least one chip. The memory or memories may be of any type suitable to the local technical environment and may be implemented using any suitable data storage technology, such as semiconductor based memory devices, magnetic memory devices and systems, optical memory devices and systems, fixed memory and removable memory. In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto.

While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The foregoing description provides by way of exemplary and non-limiting examples a full and informative description of exemplary embodiments of the invention. However, various modifications and adaptations may become apparent to those skilled in the relevant arts in view of the foregoing description, when read in conjunction with the accompanying drawings and the appended claims.

## Claims

1. A method of securing integrity of data collected in data storage apparatus (71) for an object (34) over time, comprising
receiving, at the data storage apparatus (71), data relating to the object, wherein at least a part of the data originates from a data processing entity provided in connection with the object (34),
processing, by the data storage apparatus upon receipt of the data, the received data,
the processing comprising storing the data in the data storage apparatus and at the same time computing a first digital signature (#1) for the data for later use in verification of the integrity of the data,
sending, by the data storage apparatus, the first digital signature (#1) to a distributed ledger (70) for later use in verification of the integrity of the data stored in the data storage apparatus to store the first digital signature separately from the data in the distributed ledger,
sending the data from the data storage apparatus (71) to at least one user device (38) for presentation by the at least one user device (38),
computing a second digital signature (#2) for the data by the data storage apparatus (71) at the time of sending the data from the data storage apparatus to the at least one user device (38), and
sending the second digital signature (#2) from the data storage apparatus (71) to the at least one user device (38) for use by the at least one user device in verification of the integrity of the data based on the first digital signature (#1) stored separately in the distributed ledger (70).

2. The method according to claim 1, wherein computing the digital signatures (#1, #2) comprises computing hashes for the data.

3. The method according to any preceding claim, further comprising
retrieving, in response to receiving a request for the data, the requested data from the data storage apparatus (71), and
computing the second digital signature (#2) for the retrieved data using the same algorithm that was used for computing the first digital signature (#1) for use in comparing the first digital signature and the second digital signature to verify the integrity of the data.

4. The method according to any preceding claim, further comprising
receiving, by an application (39) executed in a user device (38) the data and the second digital signature (#2),
receiving, by the application, the first digital signature (#1) from the distributed ledger (70),
comparing, by the application (39), the first digital signature (#1) and the second digital signature (#2) to verify the integrity of the data, and
controlling a display (37) of the user device accordingly.

5. The method according to any preceding claim, wherein the object (34) comprises a vehicle, the method further comprising collecting at least a part of the data by a data gathering arrangement (12) integrated with the vehicle and/or presenting verified data by a display device (11) integrated with the vehicle.

6. The method according to claim 5, comprising limiting the right to access the data stored in the data storage apparatus to devices and/or users associated with the vehicle and/or limiting presentation of at least a part of the data to user devices connected with the vehicle via a wireless short range communication link.

7. The method according to any preceding claim, comprising comparing the data for the object to data collected for other objects of similar type and verified by means of a distributed ledger.

8. The method according to claim 7, comprising ranking and/or valuing the object relative to the other objects.

9. Apparatus (71) for storing data collected for an object (34) over time, comprising at least one processor (72) and at least one memory (74) including computer program code, wherein the at least one memory and the computer program code are configured, with the at least one processor, to cause the apparatus to
receive (76) data relating to the object (34), wherein at least a part of the data is received from a data processing entity (12) provided in connection with the object,
upon receipt of the data, store the received data in the at least one memory (74) and at the same time with the storing compute a first digital signature (#1) for the data stored in the at least one memory,
send the first digital signature to a distributed ledger (70) for later use in verification of the data stored in the apparatus (71) to store the first digital signature (#1) separately from the data in the distributed ledger, and
send (78) the data to at least one user device (38) for presentation by the at least one user device (38), the apparatus being further configured to compute a second digital signature (#2) for the data at the time of sending the data from the data storage apparatus to the at least one user device (38), and send (78) the second digital signature (#2) to the at least one user device for use in verification of the integrity of the data based on the first digital signature (#1) stored in the distributed ledger (70).

10. The apparatus according to claim 9, configured to automatically compute a first hash for the data upon receipt of the data and a second hash for the data in connection with sending of the data.

11. The apparatus according to claim 9 or 10, configured to communicate the first digital signature (#1) to a blockchain.

12. The apparatus according to any of claims 9 to 11 configured to
retrieve, in response to receiving a request for the data, the requested data from the at least one memory (74), and
compute the second digital signature (#2) for the retrieved data using the same algorithm that was used for computing the first digital signature (#1) for use in verification where the integrity of the data is verified based on comparison of the first digital signature and the second digital signature.

13. The apparatus according to any of claims 9 to 12, configured to communicate data with a data processing entity (12) integrated with the object (34) and/or configured to control access to the data based on at least one of a password, a user ID, a smart card, an equipment ID, and a token.

14. The apparatus according to any of claims 9 to 13, wherein the object (34) comprises a vehicle, the apparatus further comprising a data gathering arrangement (12) integrated with the vehicle and/or user interface (11) for presenting verified data to a user by a device integrated with the vehicle.

15. A user device (38) for presenting data received from a separate data storage apparatus (71) for storing data collected for an object (34), the data storage apparatus being configured to compute a first digital signature (#1) for the data at the time of storing the data and send the first digital signature for separate storage to a distributed ledger (70) for later use in verification of the data stored in the data storage apparatus, the user device (38) comprising a user interface (37), at least one processor and at least one memory including computer program code, wherein the at least one memory and the computer program code are configured, with the at least one processor, to cause the user device to
receive (78) the data relating to the object from the data storage apparatus (71),
receive a second digital signature (#2) for the data from the data storage apparatus, wherein the second digital signature (#2) has been computed by the data storage apparatus (71) at the time of sending the data to the user device (38),
receive (79) the first digital signature (#1) from the distributed ledger (70), compare the first digital signature (#1) and the second digital signature (#2) computed for the data to verify the integrity of the data, and
control presentation of the data on the user interface accordingly.

16. The user device according to claim 15, configured to communicate with the object (34) over a wireless short range communication link, wherein the presentation of the data is enabled when the user device (38) is within the range of the link.

17. The user device according to claim 15 or 16 comprising a handheld device arranged for wireless communications and configured to handle at least one of an unique identifier, a password, a smart card, and a token in connection with access to the data.

## Patentansprüche

1. Verfahren zum Sichern der Integrität von Daten, die in einer Datenspeichervorrichtung (71) für ein Objekt (34) über die Zeit gesammelt wurden, aufweisend:
Empfangen von Daten in Bezug auf das Objekt an der Datenspeichervorrichtung (71), wobei wenigstens ein Teil der Daten von einer Datenverarbeitungseinheit stammt, die in Verbindung mit dem Objekt (34) vorgesehen ist,
Verarbeiten der empfangenen Daten durch die Datenspeichervorrichtung nach Empfang der Daten,
wobei das Verarbeiten ein Speichern der Daten in der Datenspeichervorrichtung und gleichzeitig ein Berechnen einer ersten digitalen Signatur (#1) für die Daten zur späteren Verwendung bei der Verifikation der Integrität der Daten aufweist, Senden der ersten digitalen Signatur (#1) durch die Datenspeichervorrichtung an einen Distributed Ledger (70) zur späteren Verwendung bei der Verifikation der in der Datenspeichervorrichtung gespeicherten Daten, um die erste digitale Signatur separat von den Daten im Distributed Ledger zu speichern,
Senden der Daten von der Datenspeichervorrichtung (71) an wenigstens ein Benutzergerät (38) zur Präsentation durch das wenigstens eine Benutzergerät (38),
Berechnen einer zweiten digitalen Signatur (#2) für die Daten durch die Datenspeichervorrichtung (71) gleichzeitig zum Senden der Daten von der Datenspeichervorrichtung an das wenigstens eine Benutzergerät (38), und
Senden der zweiten digitalen Signatur (#2) von der Datenspeichervorrichtung (71) an das wenigstens eine Benutzergerät (38) zur Verwendung durch das wenigstens eine Benutzergerät bei der Verifikation der Daten basierend auf der im Distributed Ledger (70) separat gespeicherten ersten digitalen Signatur (#1).

2. Verfahren nach Anspruch 1, bei welchem das Berechnen der digitalen Signaturen (#1, #2) ein Berechnen eines Hash für die Daten aufweist.

3. Verfahren nach einem der vorhergehenden Ansprüche, ferner aufweisend:
als Reaktion auf ein Empfangen einer Anforderung für die Daten Abrufen der angeforderten Daten von der Datenspeichervorrichtung (71), und
Berechnen der zweiten digitalen Signatur (#2) für die abgerufenen Daten unter Verwendung desselben Algorithmus, der zum Berechnen der ersten digitalen Signatur (#1) verwendet wurde, zur Verwendung beim Vergleichen der ersten digitalen Signatur und der zweiten digitalen Signatur, um die Integrität der Daten verifizieren.

4. Verfahren nach einem der vorhergehenden Ansprüche, ferner aufweisend:
Empfangen der Daten und der zweiten digitalen Signatur (#2) durch eine in einem Benutzergerät (38) ausgeführten Anwendung (39),
Empfangen der ersten digitalen Signatur (#1) vom Distributed Ledger (70) durch die Anwendung,
Vergleichen der ersten digitalen Signatur (#1) und der zweiten digitalen Signatur (#2) durch die Anwendung, um die Integrität der Daten zu verifizieren, und entsprechendes Ansteuern einer Anzeige (37) des Benutzergeräts.

5. Verfahren nach einem der vorhergehenden Ansprüche, bei welchem das Objekt (34) ein Fahrzeug aufweist, wobei das Verfahren ferner ein Sammeln wenigstens eines Teils der Daten durch eine mit dem Fahrzeug integrierte Datensammelanordnung (12) und/oder ein Präsentieren verifizierter Daten durch eine mit dem Fahrzeug integrierte Anzeigevorrichtung (11) aufweist.

6. Verfahren nach Anspruch 5, aufweisend ein Beschränken des Rechts zum Zugriff auf die in der Datenspeichervorrichtung gespeicherten Daten auf dem Fahrzeug zugeordnete Geräte und/oder Benutzer und/oder ein Beschränken der Präsentation wenigstens eines Teils der Daten auf Benutzergeräte, die mit dem Fahrzeug über eine drahtlose Nahbereichskommunikationsverbindung verbunden sind.

7. Verfahren nach einem der vorhergehenden Ansprüche, aufweisend ein Vergleichen der Daten für das Objekt mit Daten, die für andere Objekte ähnlicher Art gesammelt und mittels eines Distributed Ledgers verifiziert wurden.

8. Verfahren nach Anspruch 7, aufweisend ein Einstufen und/oder Bewerten des Objekts relativ zu den anderen Objekten.

9. Vorrichtung (71) zum Speichern von Daten, die für ein Objekt (34) über die Zeit gesammelt wurden, aufweisend wenigstens einen Prozessor (72) und wenigstens einen Speicher (74) mit einem Computerprogrammcode, wobei der wenigstens eine Speicher und der Computerprogrammcode mit dem wenigstens einen Prozessor konfiguriert sind, um die Vorrichtung zu veranlassen zum Empfangen (76) von Daten in Bezug auf das Objekt (34), wobei wenigstens ein Teil der Daten von einer Datenverarbeitungseinheit (12) stammt, die in Verbindung mit dem Objekt (34) vorgesehen ist,
nach Empfang der Daten Speichern der empfangenen Daten in dem wenigstens einen Speicher (74) und gleichzeitig zum Speichern Berechnen einer ersten digitalen Signatur (#1) für die in dem wenigstens einen Speicher gespeicherten Daten,
Senden der ersten digitalen Signatur an einen Distributed Ledger (70) zur späteren Verwendung bei der Verifikation der in der Vorrichtung (71) gespeicherten Daten, um die erste digitale Signatur (#1) separat von den Daten im Distributed Ledger zu speichern, und
Senden (78) der Daten an wenigstens ein Benutzergerät (38) zur Präsentation durch das wenigstens eine Benutzergerät (38), wobei die Vorrichtung ferner konfiguriert ist zum Berechnen einer zweiten digitalen Signatur (#2) für die Daten gleichzeitig zum Senden der Daten von der Datenspeichervorrichtung an das wenigstens eine Benutzergerät (38) und Senden (78) der zweiten digitalen Signatur (#2) an das wenigstens eine Benutzergerät zur Verwendung bei der Verifikation der Daten basierend auf der im Distributed Ledger (70) gespeicherten ersten digitalen Signatur (#1).

10. Vorrichtung nach Anspruch 9, konfiguriert zum automatischen Berechnen eines ersten Hash für die Daten beim Empfang der Daten und eines zweiten Hash für die Daten in Verbindung mit dem Senden der Daten.

11. Vorrichtung nach Anspruch 9 oder 10, konfiguriert zum Kommunizieren der ersten digitalen Signatur (#1) an eine Blockchain.

12. Vorrichtung nach einem der Ansprüche 9 bis 11, konfiguriert zum Abrufen der angeforderten Daten von dem wenigstens einen Speicher (74) als Reaktion auf ein Empfangen einer Anforderung für die Daten, und
Berechnen der zweiten digitalen Signatur (#2) für die abgerufenen Daten unter Verwendung desselben Algorithmus, der zum Berechnen der ersten digitalen Signatur (#1) verwendet wurde, zur Verwendung bei der Verifikation, wobei die Integrität der Daten basierend auf einem Vergleich der ersten digitalen Signatur und der zweiten digitalen Signatur verifiziert wird.

13. Vorrichtung nach einem der Ansprüche 9 bis 12, konfiguriert zum Kommunizieren von Daten mit einer mit dem Objekt (34) integrierten Datenverarbeitungseinheit (12) und/oder konfiguriert zum Steuern des Zugriffs auf die Daten basierend auf wenigstens einem von einem Passwort, einer Benutzer-ID, einer Smartcard, einer Anlagen-ID und einem Token.

14. Vorrichtung nach einem der Ansprüche 9 bis 13, bei welcher das Objekt (34) ein Fahrzeug aufweist, wobei die Vorrichtung ferner eins mit dem Fahrzeug integrierte Datensammelanordnung (12) und/oder eine Benutzerschnittstelle (11) zum Präsentieren verifizierter Daten an einen Benutzer durch ein mit dem Fahrzeug integriertes Gerät aufweist.

15. Benutzergerät (38) zum Präsentieren von Daten, die von einer separaten Datenspeichervorrichtung (71) zum Speichern von für ein Objekt (34) gesammelten Daten empfangen wurden, wobei die Datenspeichervorrichtung konfiguriert ist zum Berechnen einer ersten digitalen Signatur (#1) für die Daten zur Zeit des Speicherns der Daten und Senden der ersten digitalen Signatur zur separaten Speicherung an einen Distributed Ledger (70) zur späteren Verwendung bei der Verifikation der in der Datenspeichervorrichtung gespeicherten Daten, wobei das Benutzergerät (38) eine Benutzerschnittstelle (37), wenigstens einen Prozessor und wenigstens einen Speicher mit einem Computerprogrammcode aufweist, wobei der wenigstens eine Speicher und der Computerprogrammcode mit dem wenigstens einen Prozessor konfiguriert sind, um das Benutzergerät zu veranlassen zum
Empfangen (78) der Daten in Bezug auf das Objekt von der Datenspeichervorrichtung (71),
Empfangen einer zweiten digitalen Signatur (#2) für die Daten von der Datenspeichervorrichtung, wobei die zweite digitale Signatur (#2) durch die Datenspeichervorrichtung (71) zur Zeit des Sendens der Daten an das Benutzergerät (38) berechnet worden ist,
Empfangen (79) der ersten digitalen Signatur (#1) vom Distributed Ledger (70),
Vergleichen der ersten digitalen Signatur (#1) und der zweiten digitalen Signatur (#2), die für die Daten berechnet wurden, um die Integrität der Daten zu verifizieren, und
entsprechendes Steuern der Präsentation der Daten auf der Benutzerschnittstelle.

16. Benutzergerät nach Anspruch 15, konfiguriert zum Kommunizieren mit dem Objekt (34) über eine drahtlose Nahbereichskommunikationsverbindung, wobei die Präsentation der Daten freigegeben wird, wenn das Benutzergerät (38) im Bereich der Verbindung ist.

17. Benutzergerät nach Anspruch 15 oder 16, aufweisend ein Handgerät, das eingerichtet ist zu drahtlosen Kommunikationen und konfiguriert ist zum Handhaben wenigstens eines von einer eindeutigen Kennung, einem Passwort, einer Smartcard und einem Token in Verbindung mit einem Zugriff auf die Daten.

## Revendications

1. Procédé de sécurisation de l'intégrité de données collectées au cours du temps dans un appareil de stockage de données (71) pour un objet (34), consistant à :
recevoir, au niveau de l'appareil de stockage de données (71), des données relatives à l'objet, dans lequel au moins une partie des données provient d'une entité de traitement de données fournie en relation avec l'objet (34) ;
traiter, par l'appareil de stockage de données à la réception des données, les données reçues, le traitement consistant à stocker les données dans l'appareil de stockage de données et à calculer au même moment une première signature numérique (#1) pour les données pour une utilisation ultérieure à des fins de vérification de l'intégrité des données ;
envoyer, par l'appareil de stockage de données, la première signature numérique (#1) vers un registre distribué (70) pour une utilisation ultérieure à des fins de vérification de l'intégrité des données stockées dans l'appareil de stockage de données, pour stocker la première signature numérique séparément des données dans le registre distribué ;
envoyer les données de l'appareil de stockage de données (71) vers au moins un dispositif d'utilisateur (38) pour présentation par ledit au moins un dispositif d'utilisateur (38) ;
calculer, par l'appareil de stockage de données (71), une deuxième signature numérique (#2) pour les données au moment de l'envoi des données de l'appareil de stockage de données vers ledit au moins un dispositif d'utilisateur (38) ; et
envoyer la deuxième signature numérique (#2) de l'appareil de stockage de données (71) vers ledit au moins un dispositif d'utilisateur (38) pour une utilisation par ledit au moins un dispositif d'utilisateur à des fins de vérification de l'intégrité des données sur la base de la première signature numérique (#1) stockée séparément dans le registre distribué (70).

2. Procédé selon la revendication 1, dans lequel le calcul des signatures numériques (#1, #2) comprend le calcul de hachages pour les données.

3. Procédé selon l'une quelconque des revendications précédentes, consistant en outre à :
récupérer, en réponse à la réception d'une demande de données, les données demandées à partir de l'appareil de stockage de données (71) ; et
calculer la deuxième signature numérique (#2) pour les données récupérées en utilisant le même algorithme que celui utilisé pour calculer la première signature numérique (#1), pour une utilisation à des fins de comparaison entre la première signature numérique et la deuxième signature numérique pour vérifier l'intégrité des données.

4. Procédé selon l'une quelconque des revendications précédentes, consistant en outre à :
recevoir, par une application (39) exécutée dans un dispositif d'utilisateur (38), les données et la deuxième signature numérique (#2),
recevoir, par l'application, la première signature numérique (#1) issue du registre distribué (70) ;
comparer, par l'application (39), la première signature numérique (#1) et la deuxième signature numérique (#2) pour vérifier l'intégrité des données ; et
contrôler en conséquence un affichage (37) du dispositif d'utilisateur.

5. Procédé selon l'une quelconque des revendications précédentes, dans lequel l'objet (34) comprend un véhicule, le procédé consistant en outre à collecter au moins une partie des données par un agencement de collecte de données (12) solidaire du véhicule, et / ou à présenter, par un dispositif d'affichage (11) solidaire du véhicule, des données vérifiées.

6. Procédé selon la revendication 5, consistant à limiter le droit d'accès aux données stockées dans l'appareil de stockage de données aux dispositifs et / ou utilisateurs associés au véhicule, et / ou à limiter la présentation d'au moins une partie des données à des dispositifs d'utilisateurs connectés au véhicule via une liaison de communication sans fil à courte portée.

7. Procédé selon l'une quelconque des revendications précédentes, consistant à comparer les données pour l'objet aux données collectées pour d'autres objets du même type et vérifiées au moyen d'un registre distribué.

8. Procédé selon la revendication 7, consistant à classer et / ou évaluer l'objet par rapport aux autres objets.

9. Appareil (71) de stockage de données collectées pour un objet (34) au cours du temps, comprenant au moins un processeur (72) et au moins une mémoire (74) incluant un code de programme informatique, dans lequel ladite au moins une mémoire et le code de programme informatique sont configurés avec ledit au moins un processeur pour amener l'appareil à :
recevoir (76) des données relatives à l'objet (34), dans lequel au moins une partie des données est reçue de la part d'une entité de traitement de données (12) qui est fournie en relation avec l'objet ;
stocker, à la réception des données, les données reçues dans ladite au moins une mémoire (74), et calculer, au même moment que celui du stockage, une première signature numérique (#1) pour les données stockées dans ladite au moins une mémoire ;
envoyer la première signature numérique vers un registre distribué (70) pour une utilisation ultérieure à des fins de vérification des données stockées dans l'appareil (71), pour stocker la première signature numérique (#1) séparément des données dans le registre distribué ; et
envoyer (78) les données vers au moins un dispositif d'utilisateur (38) pour présentation par ledit au moins un dispositif d'utilisateur (38),
l'appareil étant en outre configuré pour calculer une deuxième signature numérique (#2) pour les données au moment de l'envoi des données de l'appareil de stockage de données vers ledit au moins un dispositif d'utilisateur (38), et pour envoyer (78) la deuxième signature numérique (#2) vers ledit au moins un dispositif d'utilisateur pour une utilisation à des fins de vérification de l'intégrité des données sur la base de la première signature numérique (#1) stockée dans le registre distribué (70).

10. Appareil selon la revendication 9, étant configuré pour calculer automatiquement un premier hachage pour les données à la réception des données et un deuxième hachage pour les données en relation avec l'envoi des données.

11. Appareil selon la revendication 9 ou 10, étant configuré pour communiquer la première signature numérique (#1) à une chaîne de blocs.

12. Appareil selon l'une quelconque des revendications 9 à 11, étant configuré pour :
récupérer, en réponse à la réception d'une demande de données, les données demandées à partir de ladite au moins une mémoire (74) ; et
calculer la deuxième signature numérique (#2) pour les données récupérées en utilisant le même algorithme que celui utilisé pour calculer la première signature numérique (#1), pour une utilisation à des fins de vérification où l'intégrité des données est vérifiée sur la base d'une comparaison entre la première signature numérique et la deuxième signature numérique.

13. Appareil selon l'une quelconque des revendications 9 à 12, étant configuré pour communiquer des données avec une entité de traitement de données (12) solidaire de l'objet (34), et / ou configuré pour contrôler l'accès aux données sur la base d'au moins l'un parmi un mot de passe, un identifiant d'utilisateur, une carte à puce, un identifiant d'équipement et un jeton.

14. Appareil selon l'une quelconque des revendications 9 à 13, dans lequel l'objet (34) comprend un véhicule, l'appareil comprenant en outre un agencement de collecte de données (12) solidaire du véhicule et /ou une interface d'utilisateur (11) pour présenter, par un dispositif solidaire du véhicule, des données vérifiées à un utilisateur.

15. Dispositif d'utilisateur (38) pour présenter des données reçues de la part d'un appareil de stockage de données séparé (71) servant à stocker des données collectées pour un objet (34), l'appareil de stockage de données étant configuré pour calculer une première signature numérique (#1) pour les données au moment du stockage des données, et pour envoyer la première signature numérique pour un stockage séparé à un registre distribué (70) pour une utilisation ultérieure à des fins de vérification des données stockées dans l'appareil de stockage de données, le dispositif d'utilisateur (38) comprenant une interface d'utilisateur (37), au moins un processeur et au moins une mémoire incluant un code de programme informatique, dans lequel ladite au moins une mémoire et le code de programme informatique sont configurés avec ledit au moins un processeur, pour amener le dispositif d'utilisateur à :
recevoir (78), de la part de l'appareil de stockage de données (71), les données relatives à l'objet;
recevoir, de la part de l'appareil de stockage de données, une deuxième signature numérique (#2) pour les données, dans lequel la deuxième signature numérique (#2) a été calculée par l'appareil de stockage de données (71) au moment de l'envoi des données vers le dispositif d'utilisateur (38) ;
recevoir (79), de la part du registre distribué (70), la première signature numérique (#1);
comparer la première signature numérique (#1) et la deuxième signature numérique (#2) calculées pour les données, pour vérifier l'intégrité des données ; et
contrôler en conséquence la présentation des données sur l'interface d'utilisateur.

16. Dispositif d'utilisateur selon la revendication 15, étant configuré pour :
communiquer avec l'objet (34) via une liaison de communication sans fil à courte portée, dans lequel la présentation des données est activée lorsque le dispositif d'utilisateur (38) est à portée de la liaison.

17. Dispositif d'utilisateur selon la revendication 15 ou 16, comprenant un dispositif portable agencé pour des communications sans fil et configuré pour traiter au moins l'un parmi un identifiant unique, un mot de passe, une carte à puce et un jeton en relation avec l'accès aux données.
